# EUROPÄISCHE PATENTANMELDUNG

(11) **EP 0 913 340 A1**
(43) Veröffentlichungstag der Anmeldung: **06.05.1999**
(21) Anmeldenummer: 97202924.3
(22) Anmeldetag: 24.09.1997
(51) Int. Cl.: B65D 83/14, B65D 83/16

(54) **Verpackung mit einem Milch-bzw. Milchersatzprodukt**

(71) Anmelder: SOCIETE DES PRODUITS NESTLE S.A., 1800 Vevey (CH)
(72) Erfinder: Die Erfindernennung liegt noch nicht vor
(74) Vertreter: Thomas, Alain

(57) **Zusammenfassung**

Die Erfindung betrifft eine Verpackung mit seinem Inhalt, die aus der folgenden Kombination besteht :
- eine flüssige Phase in der ein Treibgas gelöst ist,
- eine Aerosoldose mit einem Ventil (3) versehen, die diese flüssige Phase enthält
- und eine Tülle (1) unmittelbar nach dem Ventil, die das Aussprühen und Aufschäumen der flüssigen Phase ermöglicht,
   wobei die flüssige Phase in der Gruppe von pure eingedickte Milch, Kondensmilch, teilweise Milchersatzprodukt und total Milchersatzprodukt gewählt wird, mit einem Fettgehalt zwischen 0 und 20 % und einem nichtfettem trockenem Anteil zwischen 6 und 25 %.

## Beschreibung

Die Erfindung betrifft eine Verpackung mit einem Milch- bzw. Milchersatzprodukt in flüssiger Phase.

Es ist schon bekannt Milch in unter Druck stehenden Dosen herzustellen. Das Patent WO 96/33618 betrifft eine unter Druck stehende Milchverpackung,die zum Beispiel CO2 in gelöstem Zustand enthält. Dieses Patent betrifft ein Getränk analog eines gessüssten und karbonisierten Getränk.

Der Erfindung liegt die Aufgabe zugrunde eine Verpackung mit Milchkonzentrat bzw. mit Milch ohne Fett zu haben bei denen Verwendung durch Ausspritzen ein Schaum erzeugt wird.

Die Erfindung betrifft eine Verpackung mit seinem Inhalt, die aus der folgenden Kombination besteht :
- eine flüssige Phase in der ein Treibgas gelöst ist,
- eine Aerosoldose mit einem Ventil versehen, die diese flüssige Phase enthält
- und eine Tülle unmittelbar nach dem Ventil, die das Aussprühen und Aufschäumen der flüssigen Phase ermöglicht,
   wobei die flüssige Phase in der Gruppe von pure eingedickte Milch, Kondensmilch, teilweise Milchersatzprodukt und total Milchersatzprodukt gewählt wird, mit einem Fettgehalt zwischen 0 und 20 % und einem nichtfettigem trockenem Anteil zwischen 6 und 25 %.

In der vorliegenden Beschreibung, sind alle Prozente in Gewicht gegeben.

Der Typ des Treibgases ist nicht kritisch. Man kann irgendwelches Gas verwenden, das im Lebensmittelbereich kompatibel ist. Man verwendet zum Beispiel N20, HFC, HCFC oder CO2. Die Verwendung von N2O ist bevorzugt. Das Verhältnis Treibgas/flüssige Phase ist herkömmlich, d. h. im Rahmen von 1:40 bis 1:50.

Die Grösse der Aerosoldose ist so dimensioniert um ein Gewicht der flüssigen Phase von 100 bis 500 g zu enthalten. Das verwendete Ventil ist ebenfalls herkömmlich. Die Tülle hat vorzugsweise eine spezifische Geometrie, die hierunten näher erläutert wird : Diese Tülle erlaubt einen zufriedenstellenden Schaum herzustellen. Unter zufriedenstellend versteht man einen Schaum mit einer guten Volumenzunahme und mit einer guten Remanenz.

Die möglichen flüssigen Phasen sind hieroben erwähnt. Als pure eingedickte Milch versteht man entweder eine Frischmilch, die einer Verdampfung unterzogen wurde um den Wassergehalt zu reduzieren oder eine rekombinierte Milch in der man den Trockensubstanzgehalt einstellen kann. Als rekombinierte Milch ist sowohl Milch von Magermilchpulver und Vollmilchpulver vorgesehen. Diese pure eingedickte Milch kann Zucker, Süssstoffe oder Aromen enthalten. Der Gehalt dieser Zusätze liegt im Bereich von maximal 5%. Die Süssstoffe sind Zuckerersatz, wie zum Beispiel Saccharin oder Cyclamat. Die Aromen sind im Rahmen von unter 1 % enthalten und können im breiten Rahmen gewählt werden. Man verwendet zum Beispiel Schokolade, Kakao, Erdbeerextrakt,Vanille.

Die Kondensmilch ist ähnlich mit der puren eingedickten Milch, nur das diese Milch zusätzlich Stabilisatoren enthält, wie zum Beispiel Dinatriumhydrogenphosphat. Diese Kondensmilch kann ebenfalls Zucker, Süssstoffe oder Aromen enthalten.

Als teilweise Milchersatzprodukt versteht man eine Milch in der der Fettanteil aus Milchfettanteil und Pflanzenfett besteht, und die fettfreie Trockenmasse aus Milch, Molkeneiweisskonzentrat und Schaumstabilisatoren besteht. Dieses teilweise Milchersatzprodukt kann ebenfalls Zucker, Süssstoffe und/oder Aromen enthalten. Die Schaumstabilisatoren sind Gelatine, Carrageene, Guarkernmehl, Johannisbrotkernmehl oder Mono- und Diglyceride. Das Pflanzenfett ist in der Gruppe von Kokosfett, Palmöl, Sojaöl gewählt.

Als total Milchersatzprodukt versteht man ein Produkt mit einem Fettanteil, das aus Pflanzenfett besteht und mit einem nichtfetten trockenen Anteil, der aus Kohlenhydrate, Kaseinate und Schaumstabilisatoren besteht. Die Kohlenhydrate sind in der Gruppe von Maltodextrin, Glukosesirup gewählt. Das Pflanzenfett und die Schaumstabilisatoren sind die gleichen wie schon oben erwähnt. Dieser total Milchersatzprodukt kann ebenfalls Zucker, Süssstoffe oder Aromen enthalten.

Die erfindungsgemässe Verpackung beinhaltet vorzugsweise eine flüssige Phase, die einen Fettgehalt zwischen 4 und 12 % und einen nichtfetten trockenen Anteil zwischen 15 und 20 % beträgt.

Die Herstellung der erfindungsgemässen Verpackung mit einer flüssigen Phase aus purer eingedickter Milch wird nach folgendem Prinzip hergestellt. Die Rohmilch wird nach üblichem Verfahren entrahmt und pasteurisiert. Diese Milch wird dann zur Erzielung des gewünschten Fett/nichtfett trockenen Anteil standardisiert und nach üblichem Verfahren konzentriert. Gegebenenfalls werden die übrigen Rezepturkomponenten in einem üblichen Mischverfahren beigemischt. Bei Varianten ohne Milchanteil erfolgt die Einmischung im Wasser. Auch Rekombination des Mischanteiles ist möglich. Die UHT Sterilisation des Produkt wird dann durchgeführt mit folgenden Erhitzungsparameter :
- Temperatur zwischen 125 und 150 °C mit einer Zeit zwischen 1 Sekunde bis 5 Minuten.
Die Homogenisation des Produktes erfolgt dann mit Drücken von 30 bis 350 bar. Schlussendlich wird eine sterile Abfüllung unter Zugabe von Treibgas in Aerosoldosen durchgeführt. Eine Aufsprühtülle, die eine Injektion des Produktes in den Kaffee ermöglicht, bei Bildung eines glatten feinporigen Schaumes, wird auf dem Ventil der Aerosoldose aufgesetzt. Durch diese sterile Abfüllung kann man eine Haltbarkeit von mindestens 6 Monaten bei gekühlter und ungekühlter Lagerung erzielen.

Mit der erfindungsgemässen Verpackung kann ein Schaum erzeugt werden. Eine Verwendung kann in Kaffee oder in Verbindung mit einem anderen Lebensmittel erfolgen, zum Beispiel im Dessertbereich, als Topping auf Früchten oder Fruchtsalaten. Der Schaum entspricht dem Schaum von Cappucclno. Das Produkt liegt in der Dose in flüssiger Form vor, beim Aussprühen mittels Treibgas wird der Schaum in der Tülle erzeugt. Durch die mögliche Injektion in den Kaffee kann ein gewisser Temperaturausgleich zwischen Schaum und Kaffee erfolgen.. Das Aufschäumen und die Injektion in den Kaffee wird durch eine spezielle Sprühtülle ermöglicht. Die Tülle wird in Verbindung mit der nachstehenden Figur näher beschrieben.

Es kann auch Vorlage des Schaumes und späteres Aufgiessen des Kaffees erfolgen, damit wird die gleiche Wirkung im fertigen Kaffee erreicht. Durch den Schaum wird der Kaffee wie mit Kondensmilch geweisst.

Die Erfindung wird anhand der beiliegenden Zeichnungen erläutert, wobei
Fig. 1 zeigt einen Schnitt der Tülle und
Fig. 2 eine Aufsicht von oben gemäss Pfeil A.

Die Tülle (1) besteht aus einem Aufsatz (2), der oberhalb der Mündung des Ventils (3) sitzt und einem Austrittsröhrchen (4). Auf dem Aufsatz hat man eine Druckstelle (5), die die Betätigung des Ventils erlaubt. Das Austrittsröhrchen weist drinnen ein Stern (6) auf. Dieser Stern hat eine zentrale Bohrung (7) und drei seitlichen Oeffnungen (8).

Es funktioniert folgendermassen : Der Konsument drückt auf die Stelle (5), was das Ventil öffnet. Die Milchphase fliesst dann in der Mittelbohrung (7) und aus der seitlichen Oeffnungen (8) in Form eines Schaumes. Das Fliessen in der Mitte bringt einen Injektionseffekt, das heisst einen Bewegungseffekt, während die seitliche Bohrung mehr einen grösseren Schaumeffekt erlaubt. Das Verhältnis der zentralen auf seitlichen Menge des Schaumes ist ca. 2:1. Der Injektionseffekt gibt ein gutes Diffundieren im Kaffee, was zu einem Temperaturausgleich führt.

Die Erfindung wird jetzt anhand der Beispiele näher erläutert.

### Beispiel 1

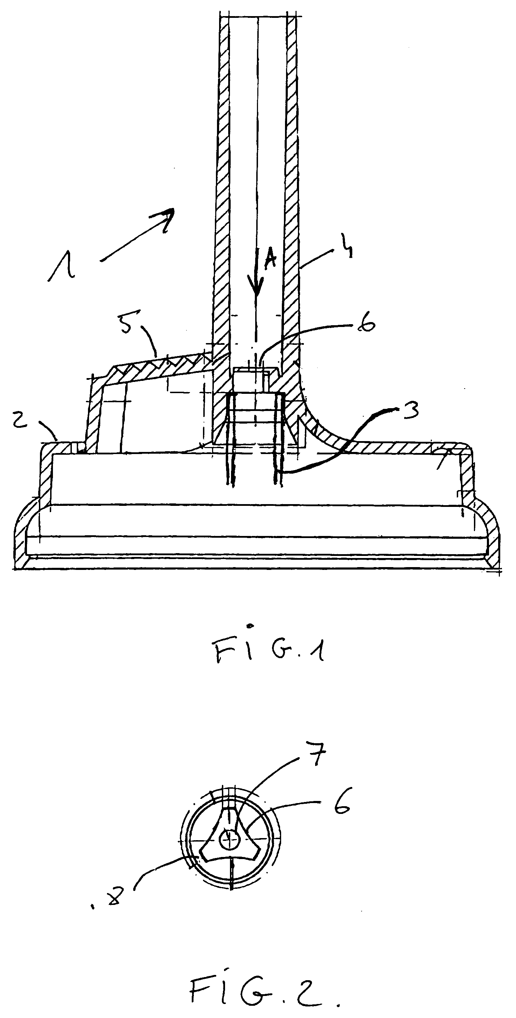

Die Rohmilch wird standardisiert, d. h. Fett wurde zugesetzt, um ein Fettgehalt von 10 % zu erzielen. Die erhaltene Milch ist dann konzentriert um einen nichtfetten trockenen Anteil von 17 % zu bekommen. Eine UHT-Sterilisation bei 148 °C während 5 Sekunden ist durchgeführt und eine aseptische Abfüllung in eine Aerosoldose findet dann statt. Eine Tülle gemäss Figur 1 und 2 wird aufgesetzt.
Die Mindesthaltbarkeit für dieses Produkt beträgt ca. 6 Monate. Die Schaumhöhe auf Kaffee soll 1-2 cm sein mit einer Schaumremanenz von 3 Minuten . Das Treibgas ist N2O mit einem Gewicht von ca. 2 g in ca. 250-260 g Milch.

### Beispiel 2

Einen ähnlichen Versuch wie im Beispiel 1 ist durchgeführt mit dem Unterschied, dass der Fettgehalt auf 8 % aufgesetzt wird und mit einem nichtfetten trockenen Anteil von 17 %. Was den Schaum betrifft, erzielt man ein ähnliches Resultat.

## Patentansprüche

1. Verpackung mit seinem Inhalt, die aus der folgenden Kombination besteht :
- eine flüssige Phase in der ein Treibgas gelöst ist,
- eine Aerosoldose mit einem Ventil versehen, die diese flüssige Phase enthält
- und eine Tülle unmittelbar nach dem Ventil, die das Aussprühen und Aufschäumen der flüssigen Phase ermöglicht,
wobei die flüssige Phase in der Gruppe von pure eingedickte Milch, Kondensmilch, teilweise Milchersatzprodukt und total Milchersatzprodukt gewählt wird, mit einem Fettgehalt zwischen 0 und 20 % und einem nichtfettem trockenem Anteil zwischen 6 und 25 %.

2. Verpackung gemäss Anspruch 1, dadurch gekennzeichnet, dass das Treibgas in der Gruppe von N20, HFC, HCFC und CO2 gewählt wird.

3. Verpackung gemäss Ansprüche 1 oder 2, dadurch gekennzeichnet, dass die flüssige Phase einen Fettgehalt zwischen 4 und 12 % und einen nichtfetten trockenen Anteil zwischen 15 und 20 % besitzt.

4. Verpackung gemäss Ansprüche 1 bis 3, dadurch gekennzeichnet, dass die flüssige Phase auch Zucker, Süssstoffen oder Aromen enthält.

5. Verpackung gemäss Ansprüche 1 bis 4, dadurch gekennzeichnet, dass das teilweise Milchersatzprodukt was der Fettanteil betrifft, aus Milchfettanteil und Pflanzenfett besteht, und was der fettfreien Trockenmasse betrifft, aus Milch , Milcheiweisskonzentrat, Molkeneiweisskonzentrat und Schaumstabilisatoren besteht.

6. Verpackung gemäss Ansprüche 1 bis 4, dadurch gekennzeichnet, dass beim total Milchersatzprodukt, der Fettanteil, aus Pflanzenfett besteht und der nichtfette trockene Anteil aus Kohlenhydrate, Kaseinate und Schaumstabilisatoren besteht.

7. Verpackung gemäss Ansprüche 5 oder 6, dadurch gekennzeichnet, dass das Pflanzenfett in der Gruppe von Kokosfett, Palmöl gewählt wird.

8. Verpackung gemäss Ansprüche 5 oder 6, dadurch gekennzeichnet, dass die Schaumstabilisatoren in der Gruppe von Gelatine, Carrageene, Guarkernmehl, Johannisbrotkernmehl und Mono- und Diglyceride gewählt werden.
